# EUROPEAN PATENT SPECIFICATION

(11) **EP 2 403 194 B1**
(45) Date of publication and mention of the grant of the patent: **22.08.2012**
(21) Application number: 10290355.6
(22) Date of filing: 30.06.2010
(51) Int. Cl.: H04L 12/56

(54) **Method and apparatus for aggregated packet switching**
Verfahren und Vorrichtung zur aggregierten Paketweiterleitung
Procédé et appareil pour la commutation en paquets regroupés

(43) Date of publication of application: 04.01.2012
(73) Proprietor: Alcatel Lucent, 75007 Paris (FR)
(72) Inventor: Lautenschlaeger, Wolfram, 74343 Sachsenheim (DE)
(74) Representative: Urlichs, Stefan

(56) References cited:
- US-A1- 2006 072 615
- US-A1- 2007 299 987

## Description

### Field of the Invention

The present invention relates to the field of telecommunications and more particularly to a method and related apparatus for switching packets in an aggregated manner.

### Background of the Invention

Packet switching technology is increasing in modern telecommunications networks. Drivers are the packet based customer networks and the increasing popularity of the Internet. Transport (or core) networks, which traditionally relied on circuit switching technology, will hence have to implement packet switching technology, too.

On the other hand, the line rates in customer networks as well as in the access networks are increasing due to the increasing data volumes exchanged through video or other bandwidth hungry applications. Furthermore, the need to reduce transmission delay for time critical applications and the end-to-end acknowledgment mechanisms used in the TCP/IP protocol stack lead to a high amount of small size packets. Studies have shown that about 50 % of all packets have a packet size smaller than 100 Bytes. All this contributes to an increasing switching density in the network and requires huge processing power for packet header processing. In particular, the packet header processing effort is increasing even more than proportional with the line rate, which creates a scalability problem for future packet node design and leads to high power consumption.

A solution to this scalability issue is known as frame aggregation or frame switching. The conference article "Frame Assembly in Packet Core Networks - Overview and Experimental Results" by W. Loutenschläger at al, 10th ITG Symposium on Photonic Networks, Leipzig May 4/5, 2009, discusses frame switching technology and presents promising experimental results.

In essence, packets are collected at the edge of the core network into larger transport containers of approximately 9 to 16 kBytes. The containers are switched through the frame switched core network as undividable entities. Compared to the original packet traffic, which is of 64 Bytes packets in the worst case, the frequency of frames can be reduced by a factor of 100 and more. The installed processing power in the core nodes can be relaxed accordingly, while the flexibility and responsiveness to changing traffic conditions remains the same as for a packet network.

Patent application US 2006/0072615 describes a system where end nodes aggregate packets into a single Advanced Switching ("AS") packet which is than switched through an AS fabric. The end nodes determine whether characteristics common to the received packets such as same source/destination will enable aggregation into a single AS packet for transport across AS fabric. The received packets need not be members of a single flow, as long as, sufficient characteristics are common to allow group transportation across AS fabric. The AS packet has a header, which may include destination information and source information.

### Summary of the Invention

A network node of such a frame switching network is incompatible to the existing packet network infrastructure. For the transition between both network types, a devices referred to as Frame Aggregation Unit (FAU) at ingress and egress of the core network is mandatory. To benefit from frame switching, at least a frame switching island network of reasonable size needs to be introduced at once. This prevents operators from stepwise investments into frame switching technology.

It is therefore an object of the present invention, to provide a method and related network node for switching packets in an aggregated form, which allows a stepwise introduction into existing packet networks.

These and other objects that appear below are achieved by a method and related network node for switching data packets through a network in an aggregated manner. Data packets from various packet sources sharing a common egress node are assembled at an assembly edge node into a larger size container. Address information indicative of said common egress node is added to each container. Each container is then switched through the network to the common egress node in accordance with the address information added. At the common egress node, the packets are extracted again from the container and forwarded in accordance with packet addresses contained in each data packet. According to the present embodiments, containers are formed by assembling the data packets into a chain of packets, each having a valid packet line code and adding an additional header packet to the chain of packets, wherein the header packet contains the address information as well as information indicative of the length of the subsequent packet chain.

Since the individual packets are coded using valid packet line code that would be recognized as individual stand-alone packets, too, downstream nodes are hence free to make use of this information or not. Downstream nodes, which are capable of "virtual" frame switching, can make use of the header packet and process the whole chain of packets at once. At an egress node of the core network, the header packet is simply dropped. Packet switching nodes, which are not adapted for virtual frame switching, would recognize the header packet as unknown or invalid and hence simply drop the header packet.

### Brief Description of the Drawings

Preferred embodiments of the present invention will now be described with reference to the accompanying drawings in which
- figure 1: shows a block diagram of an assembly edge node for a frame switched network;
- figure 2: shows a block diagram of a frame aggregation unit used in an assembly egde node; and
- figures 3a: and b show a comparison between frame switching according to the prior art (figure 3a) and in accordance with the present embodiment (figure 3b).

### Detailed Description of the Invention

The following embodiment is based on assembling data packets to larger size frames or containers. The frame assembly process puts packets back-to-back without intermediate gaps into larger containers. The network then forwards these containers individually in a store and forward, packet-switched manner exploiting potential multiplexing gains.

Container frame forwarding within the core network requires a routable address, e.g. IP address, or a path identifier identifying a pre-configured label switched path (LSP). Such address information is transported within a header section of each container.

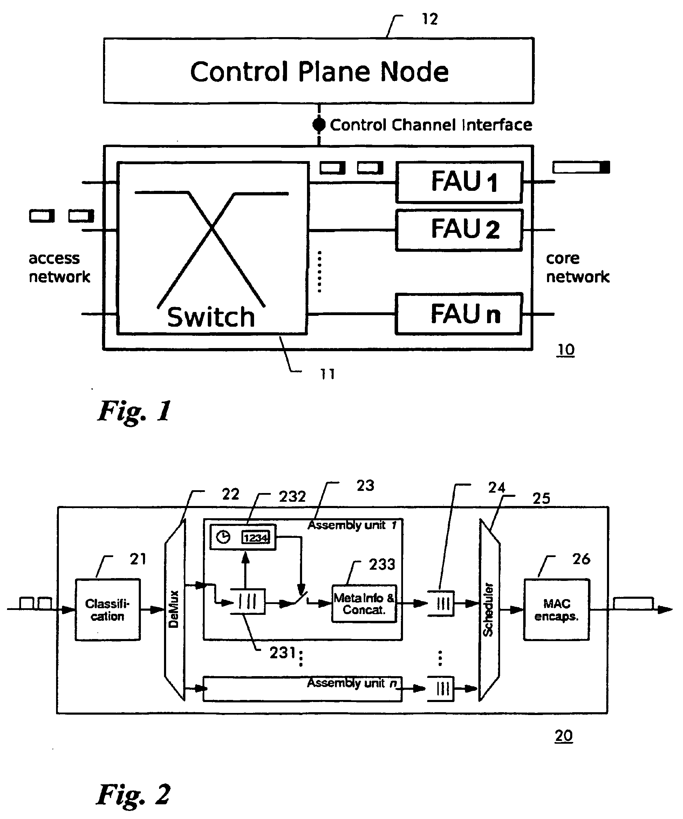

The key element in a frame switched network is the assembly edge node (AEN), which assembles packets to frames. Figure 1 shows a functional architecture of an assembly edge node.

The AEN 10 in figure 1 contains two independent functions: switching and assembly for switching of traffic flows and assembly of aggregated traffic, respectively. In particular, a switch 11 connects packet interfaces from an access network with a number of Frame Assembly Units FAU 1-FAUn, which connect to the frame switched core network. A control plane node 12 controls and configures the AEN and serves set to up label switched paths through the core network using the traffic engineering protocols of the well known GMPLS protocol suite.

Packets received on the left hand side of figure 1 are switched by switch 11 to different frame aggregation units FAU 1-FAUn in accordance with routing information contained in each packet. The frame aggregation units aggregate received packets to into frames and add routing information for each frame and forward the frames to the core network on the right hand side.

Figure 2 shows the functional architecture of the FAU's ingress direction. From left to right, a classifier 21 classifies incoming packets according to destination egress AEN and CoS class and assigns them to a corresponding internal Forwarding Equivalent Class (FEC). The subsequent assembly stage assembles packets of the same FEC to frames using one assembly unit 23 per FEC. Therefore, a queue 231 in the corresponding assembly unit 23 collects arriving packet data. In every assembly unit, the control block 232 monitors the FIFO fill level and triggers a frame generation when exceeding the threshold. A packet arrival into an empty FIFO starts a timer to avoid starvation. Upon timeout, the assembly unit 23 generates a frame irrespective of the amount of available packet data. In case of fixed size frames, the assembly stage fragments packets to fill frames completely. A padding generator (not shown) may append padding if the amount of collected packet data is below the minimum frame size. Before concatenation to one continuous data block, meta information is added at circuit 233 to enable packet delineation in egress direction.

A buffering stage 24 stores frames ready for transmission in case of congestion, while a following scheduler 25 handles the frames according to their Class of Service (CoS). A MAC encapsulation stage 26 finalizes the frame for transmission by adding layer 2 headers and trailers, e.g. using Ethernet encoding.

In order to allow a seamless integration of frame switching nodes with existing packet switching nodes, a new "virtual" frame format is proposed. In particular, the frame format is reduced to just an additional header packet. This header packet indicates that the following N packets could be treated as an undividable whole. The individual packets, however, are valid packet line code that would be recognized as individual stand-alone packets, too. Downstream nodes are hence free to make use of this information or not.

The header packet has also a valid packet line code, however, contains an indication that indentifies it as a header packet. Moreover, a packet switching node, which is not adapted for frame switching, would recognize the header packet as unknown or invalid and hence simply drop the header packet.

According to the present embodiment, the ingress node of figure 2 accumulates packets in its frame assembly stage per egress destination and quality class. As soon as sufficient packet volume is assembled (or the starvation timer lapsed), it forwards the whole chain of packets. The whole chain of packets is then switched through the core network according to the header packet at the beginning of the chain. At an egress node of the core network, the header packet is simply dropped. In the access network, packet forwarding continues according to the packet headers as usual.

In a node that receives the virtual frame containing the whole chain of packets lead by the header packet, the following alternatives could occur:
(a) The receiving node could be a frame switching enabled node. When receiving the header packet, the node does all routing, queuing, and forwarding decisions based on just the header packet information and than forwards the virtual frame as one entity, again with an appropriate header packet in front of the packet chain. For the payload packets only the link layer processing is done, e.g. line coding.
(b) Based on the information from the header packet, a frame switching enabled node receiving the header packet could also recognize that it shall act as egress node for the virtual frame. In this case it simply drops the header packet and processes the payload packets individually as usual. No egress FAU is required.
(c) In the case that a frame switching unaware packet node receives the header packet, it recognizes that the header packet has an invalid format or packet type and simply discards the header packet. Then it processes the following payload packets as usual. As in alternative (b), no egress FAU is required.

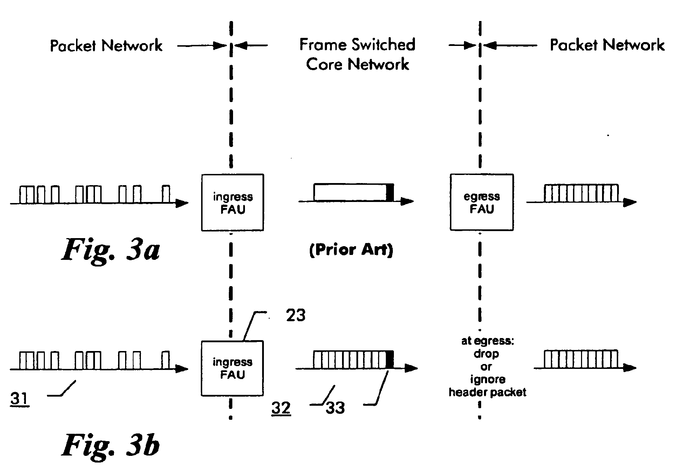

Figures 3a and b show a comparison between the known frame switching with opaque frames and the present concept of virtual frames as proposed in the present embodiment.

Figure 3a shows traditional frame switching with opaque frames. The payload packets can be revealed only by special purpose egress Frame Aggregation Unit (FAU). The frame switched network does not see the payload packets inside the frame.

Conversely, figure 3b shows virtual frames 32. The packets 31 in the frame are tied together by the declaration in the header packet 33. Network nodes capable of virtual frame switching can make use of the header packet 33 and process the whole chain of packets at once. Nevertheless the individual packets 31 are valid packet line code that would be recognized stand-alone, too. At the egress of a frame switching "island" network or sub-network, the header packet 33 is removed, either intentionally by a virtual frame switching aware node recognizing that it shall act as edge node, or implicitly by an "unknown packet type" drop in a legacy packet node.

## Claims

1. A method of switching data packets through a network in an aggregated manner, comprising:
- assembling at an assembly edge node (10) data packets (31) from various packet sources sharing a common egress node into a larger size container (32);
- adding to said container (32) address information indicative of said common egress node;
- switching said container (32) in accordance with said address information added through said network to said common egress node; and
- at said common egress node, extracting said packets from said container and forwarding said data packets in accordance with packet addresses contained in each data packet;
**characterized in that**
to form said container (32), said data packets (31) are assembled into a chain of packets each having a valid packet line code and wherein an additional header packet (33) is added to said chain of packets, said header packet (33) comprising said address information and information indicative of the length of the subsequent packet chain.

2. A method according to claim 1, wherein at said common egress node, the header packet (33) is dropped.

3. A method according to claim 1 or 2, wherein at a packet switching node, which is not enabled for switching said data packets in aggregated manner, said header packet (33) is recognized as invalid or of unknown type and consequently dropped.

4. A method according to any of claims 1 to 3, wherein said container (32) is transmitted through said network at a higher transmission rate than a maximum data rate at which said data packets (31) are received at said assembly edge node (10).

5. A method according to claim 4, wherein said data packets (31) are forwarded at said common egress node at a maximum data rate, which is lower than the transmission rate of said container (32).

6. A method according to any of claims 1 to 5, wherein said address information contains a label indicative of a preconfigured label switched path through said network towards said common egress node.

7. A method according to any of claims 1 to 6, wherein said assembling step further takes into account a service class of said packets and assembles packets of different service classes into different containers.

8. A network node for switching data packets through a network in an aggregated manner, comprising at least one frame aggregation unit (FAU 1-FAUn; 23) capable of assembling data packets (31) from various packet sources sharing to a common egress node into a larger size container (32) and adding address information indicative of said common egress node to said container (32);
**characterized in that**
to form said container (32), said frame aggregation unit (FAU1-FAUn; 23) is adapted to assemble said data packets (31) into a chain of packets having a valid packet line code, each, and add an additional header packet (33) to said chain of packets, said header packet (33) comprising said address information and information indicative of the length of the following packet chain.

9. A network node according to claim 8, wherein said frame aggregation unit (FAU1-FAUn; 23) comprises an input queue (231) for storing received data packets, a control block (232), which triggers generation of a frame whenever a packet waits for a predetermined amount of time and whenever the input queue (231) reaches a predetermined filling level; and a header generator (233) for adding said header packet (33) to each container. (32)

10. A network node (10) according to claim 8 or 9, comprising a number of frame aggregation units (FAU1-FAUn) and a packet switch (11) for distributing received data packets to said frame aggregation units (FAU1-FAUn) in dependence of destination addresses of said packets.

11. A network node according to claim 10, wherein said switch (11) is adapted to distribute said data packets to said frame aggregation units (FAU1-FAUn) in dependence of destination address and service class of each packet.

## Patentansprüche

1. Verfahren zur Vermittlung von Datenpaketen durch ein Netzwerk in aggregierter Weise, umfassend:
- Zusammensetzen, an einem Zusammensetzungs-Randknoten (10), von Datenpaketen (31) von verschiedenen Paketquellen, welche einen gemeinsamen Ausgangsknoten benutzen, zu einem größeren Container (32);
- Hinzufügen, zu dem besagten Container (32), einer Adressinformation, welche für den gemeinsamen Ausgangsknoten indikativ ist;
- Vermitteln des besagten Containers (32) gemäß der besagten hinzugefügten Adressinformation durch das besagte Netzwerk an den besagten gemeinsamen Ausgangsknoten; und
- an dem besagten gemeinsamen Ausgangsknoten, Extrahieren der besagten Pakete aus dem besagten Container, und Weiterleiten der besagten Datenpakete gemäß den in jedem Datenpaket enthaltenen Paketadressen;
**dadurch gekennzeichnet, dass**
die besagten Daten (31), um den besagten Container (32) zu bilden, in eine Kette von Paketen zusammengesetzt werden, welche jeweils einen gültigen Paketleitungscode aufweisen, und wobei ein zusätzliches Header-Paket (33) zu der besagten Kette von Paketen hinzugefügt wird, wobei das besagte Header-Paket (33) die besagte Adressinformation sowie Informationen, die für die Länge der nachfolgenden Paketkette indikativ sind, enthält.

2. Verfahren nach Anspruch 1, wobei das Header-Paket (33) an dem besagten Ausgangsknoten verworfen wird.

3. Verfahren nach Anspruch 1 oder 2, wobei das besage Header-Paket (33) an einem Paketvermittlungsknoten, welcher nicht für das Vermitteln der besagten Datenpakete in aggregierter Weise geeignet ist, als ungültig oder als von unbekanntem Typ erkannt und infolgedessen verworfen wird.

4. Verfahren nach einem beliebigen der Ansprüche 1 bis 3, wobei der besagte Container (32) mit einer höheren Übertragungsrate als eine maximale Datenrate, mit welcher die besagten Datenpakete (31) an dem besagten Zusammensetzungs-Randknoten (10) empfangen werden, durch das besagte Netzwerk übertragen werden.

5. Verfahren nach Anspruch 4, wobei die besagten Datenpakete (31) an dem besagten gemeinsamen Ausgangsknoten mit einer maximalen Datenrate, welche niedriger ist als die Übertragungsrate des besagten Containers (32), weitergeleitet werden.

6. Verfahren nach einem beliebigen der Ansprüche 1 bis 5, wobei die besagte Adressinformation ein Label, welches für einen vorkonfigurierten labelvermittelten Pfad durch das besagte Netzwerk zu dem gemeinsamen Ausgangsknoten indikativ ist, enthält.

7. Verfahren nach einem beliebigen der Ansprüche 1 bis 6, wobei der besagte Schritt des Zusammensetzens weiterhin eine Dienstklasse der besagten Pakete berücksichtigt und Pakete unterschiedlicher Dienstklassen zu unterschiedlichen Containern zusammensetzt.

8. Netzwerkknoten, welcher für das Vermitteln von Datenpaketen durch ein Netzwerk in aggregierter Weise ausgelegt ist, umfassend mindestens eine Rahmenaggregationseinheit (FAU1-FAUn; 23), welche fähig ist, Datenpakete (31) von verschiedenen Paketquellen, die einen gemeinsamen Ausgangsknoten benutzen, zu einem größeren Container (32) zusammenzusetzen und eine Adressinformation, welche für den besagten gemeinsamen Ausgangsknoten indikativ ist, zu dem besagten Container (32) hinzuzufügen;
**dadurch gekennzeichnet, dass**
die besagte Rahmenaggregationseinheit (FAU1-FAUn; 23), um den besagten Container (32) zu bilden, dazu ausgelegt ist, die besagten Datenpakete (31) in eine Kette von Paketen zusammenzusetzen, welche jeweils einen gültigen Paketleitungscode aufweisen, und ein zusätzliches Header-Paket (33) zu der besagten Kette von Paketen hinzuzufügen, wobei das besagte Header-Paket (33) die besagte Adressinformation sowie Informationen, welche für die Länge der nächsten Paketkette indikativ sind, enthält.

9. Netzwerkknoten nach Anspruch 8, wobei die besagte Rahmenaggregationseinheit (FAU1-FAUn; 23) eine Eingangswarteschlange (231) zum Speichern der empfangenen Datenpakete, einen Steuerblock (232), welcher dazu ausgelegt ist, das Erzeugen eines Rahmens zu triggern, wenn ein Paket während einer vorgegebenen Zeitdauer wartet und wenn die Eingangswarteschlange (231) einen vorgegebenen Füllstand erreicht; und einen Header-Generator (233), welcher dazu ausgelegt ist, das besagte Header-Paket (33) zu jedem Container (32) hinzuzufügen, umfasst.

10. Netzwerkknoten (10) nach Anspruch 8 oder 9, umfassend eine Anzahl von Rahmenaggregationseinheiten (FAU1-FAUn) und einen Paket-Switch (11), welcher dazu ausgelegt ist, empfangene Datenpakete in Abhängigkeit von den Zieladressen der besagten Pakete an die besagten Rahmenaggregationseinheiten (FAU1-FAUn) zu verteilen.

11. Netzwerkknoten nach Anspruch 10, wobei der besagte Switch (11) dazu ausgelegt ist, die besagten Datenpakete in Abhängigkeit von der Zieladresse und der Dienstklasse eines jeden Pakets an die besagten Rahmenaggregationseinheiten (FAU1-FAUn) zu verteilen.

## Revendications

1. Procédé de commutation de paquets de données à travers un réseau de manière agrégée, comprenant les étapes suivantes :
- rassembler, au niveau d'un noeud de bordure d'assemblage (10), des paquets de données (31) provenant de diverses sources de paquets partageant un noeud de sortie commun dans un conteneur (32) de plus grande taille ;
- ajouter dans ledit conteneur (32) des informations d'adresse indiquant ledit noeud de sortie commun ;
- commuter ledit conteneur (32) conformément auxdites informations d'adresse ajoutées à travers ledit réseau dans ledit noeud de sortie commun ; et
- au niveau dudit noeud de sortie commun, extraire lesdits paquets dudit conteneur et transférer lesdits paquets de données conformément aux adresses de paquets contenues dans chaque paquet de données ;
**caractérisé en ce que**
pour former ledit conteneur (32), lesdits paquets de données (31) sont rassemblés en une chaîne de paquets possédant chacun un code en ligne de paquet valide et dans lequel un paquet d'en-tête (33) supplémentaire est ajouté à ladite chaîne de paquets, ledit paquet d'en-tête (33) comprenant lesdites informations d'adresse et informations indiquant la longueur de la chaîne de paquets suivante.

2. Procédé selon la revendication 1, dans lequel au niveau dudit noeud de sortie commun, le paquet d'en-tête (33) est rejeté.

3. Procédé selon la revendication 1 ou 2, dans lequel au niveau d'un noeud de commutation de paquets, qui n'est pas activé pour commuter lesdits paquets de données de manière agrégée, ledit paquet d'en-tète (33) est reconnu comme étant invalide ou de type inconnu et est par conséquent rejeté.

4. Procédé selon l'une quelconque des revendications 1 à 3, dans lequel ledit conteneur (32) est transmis à travers ledit réseau à un débit de transmission supérieur à un débit de données maximum auquel lesdits paquets de données (31) sont reçus au niveau dudit noeud de bordure d'assemblage (10).

5. Procédé selon la revendication 4, dans lequel lesdits paquets de données (31) sont transférés au niveau dudit noeud de sortie commun à un débit de données maximum, qui est inférieur au débit de transmission dudit conteneur (32).

6. Procédé selon l'une quelconque des revendications 1 à 5, dans lequel lesdites informations d'adresse contiennent une étiquette indiquant un chemin à commutation d'étiquettes pré-configuré à travers ledit réseau vers ledit noeud de sortie commun.

7. Procédé selon l'une quelconque des revendications 1 à 6, dans lequel ladite étape d'assemblage tient en outre compte d'une classe de service desdits paquets et rassemble des paquets de différentes classes de service dans différents conteneurs.

8. Noeud de réseau adapté pour commuter des paquets de données à travers un réseau de manière agrégée, comprenant au moins une unité d'agrégation de trames (FAU1 à FAUn ; 23) pouvant rassembler des paquets de données (31) provenant de diverses sources de paquets partageant un noeud de sortie commun dans un conteneur (32) de plus grande taille et pouvant ajouter des informations d'adresse indiquant ledit noeud de sortie commun audit conteneur (32) ;
**caractérisé en ce que**
pour former ledit conteneur (32), ladite unité d'agrégation de trames (FAU1 à FAUn ; 23) est adaptée pour rassembler lesdits paquets de données (31) en une chaîne de paquets présentant chacun un code en ligne de paquet valide, et pour ajouter un paquet d'en-tête (33) supplémentaire à ladite chaîne de paquets, ledit paquet d'en-tête (33) comprenant lesdites informations d'adresse et informations indiquant la longueur de la chaîne de paquets suivante.

9. Noeud de réseau selon la revendication 8, dans lequel ladite unité d'agrégation de trames (FAU1 à FAUn ; 23) comprend une file d'attente d'entrée (231) pour stocker des paquets de données reçus, un bloc de commande (232) adapté pour déclencher la génération d'une trame chaque fois qu'un paquet attend pendant un délai prédéterminé et chaque fois que la file d'attente d'entrée (231) atteint un niveau de remplissage prédéterminé ; et un générateur d'en-tête (233) adapté pour ajouter ledit paquet d'en-tête (33) à chaque conteneur (32).

10. Noeud de réseau (10) selon la revendication 8 ou 9, comprenant plusieurs unités d'agrégation de trames (FAU1 à FAUn) et un commutateur de paquets (11) adapté pour distribuer des paquets de données reçus auxdites unités d'agrégation de trames (FAU1 à FAUn) en fonction des adresses de destination desdits paquets.

11. Noeud de réseau selon la revendication 10, dans lequel ledit commutateur (11) est adapté pour distribuer lesdits paquets de données auxdites unités d'agrégation de trames (FAU1 à FAUn) en fonction de l'adresse de destination et de la classe de service de chaque paquet.
